# EUROPEAN PATENT APPLICATION

(11) **EP 4 238 670 A1**
(43) Date of publication of application: **06.09.2023**
(21) Application number: 22160151.1
(22) Date of filing: 04.03.2022
(51) Int. Cl.: B22F 3/12, B22F 5/00, B41M 5/26, C22C 29/06, E21B 10/56, B22F 3/10

(54) **ROCK DRILL INSERT WITH IDENTIFICATION TAG**

(71) Applicant: Sandvik Mining and Construction Tools AB, 81181 Sandviken (SE)
(72) Inventor: NORGREN, Susanne, 12680 Västberga (SE); GRAVNINGSBRÅTEN, Jan, 73790 Ängelsberg (SE); BAUDIN, Micael, 75221 Uppsala (SE)
(74) Representative: Sandvik

(57) **Abstract**

A cemented carbide insert for mining or rock cutting applications comprising an at least partially flat base and a working tip portion; characterized in that: the insert further comprises at least one identification (ID) marker encoded with one-dimensional or two-dimensional optical machine-readable code.

## Description

### FIELD OF INVENTION

The present invention relates to a cemented carbide insert or button for mining or rock cutting applications comprising an identification tag.

### BACKGROUND

Cemented carbide comprises a hard metal phase and a binder phase and has a unique combination of high elastic modulus, high hardness, high compressive strength, high wear and abrasion resistance with a good level of toughness. Therefore, cemented carbide is commonly used in products such as mining inserts. The tungsten and cobalt in the cemented carbide bodies are both strategic rare metals and therefore there is significant value and an environmental benefit to being able recycle the inserts to provide an important secondary resource of cobalt and tungsten metals and to gain information about the origin of the cobalt and tungsten to ensure safe and responsible mining and material sourcing. In order for cemented carbide inserts to be able to be recycled into new cemented carbide material it is important to know what the composition of the cemented carbide insert is. However, the problem is that exposure to post sintering treatments and to the harsh environmental surroundings during the drilling or cutting operation of the inserts means that identification markings produced by known methods of marking mining inserts that could be used to sort the inserts into batches containing the same composition ready for recycling or for back tracing the origin of the product and its constituents do not survive.

Therefore, the problem to be solved to how to provide an identification marking on the drill bit insert that survives operating conditions.

### Summary of the Invention

According to a first aspect of the present invention it is an objective to provide a cemented carbide insert for mining or rock cutting applications comprising an at least partially flat base and a working tip portion; characterized in that: the insert further comprises at least one identification (ID) marker encoded with one-dimensional or two-dimensional optical machine-readable code.

Advantageously, this enables inserts to be sorted post use into different material categories ready for recycling. Additionally, it allows information on drilling performance to be collected, for example, how different cemented carbide compositions perform in the field as it would be possible to trace where different inserts have been used. This will enable further technical development as more information is gained. Therefore, allowing traceability of the carbide and its process parameters.

According to a second aspect of the present invention it is an objective to provide a method of producing the cemented carbide insert as described hereinbefore or hereinafter comprising the steps of:
forming a green body from a powder composition comprising at least the one or more hard constituents, the metallic binder phase, and an organic binder system;
sintering the green body to form a sintered insert; and
adding an ID marking to the insert.

Advantageously, this provides a method ID tagging mining inserts so that they can be sorted post use into different material categories ready for recycling and enable information on drilling performance to be collected. The marking can also be used when mounting the inserts into the bit to assure that the right button and grade is in the right position. This linked with the marking of the bit enables sorting after use to be able to sort the buttons (and the bit) which in turn enables and allows increased amount of recycling of carbides.

### Brief description of drawings

A specific implementation of the present invention will now be described, by way of example only, and with reference to the accompanying drawings in which:
Figure 1 is a side view of a rock drill insert
Figure 2 is a perspective view of a rock drill insert having an ID marker.

### Detailed description

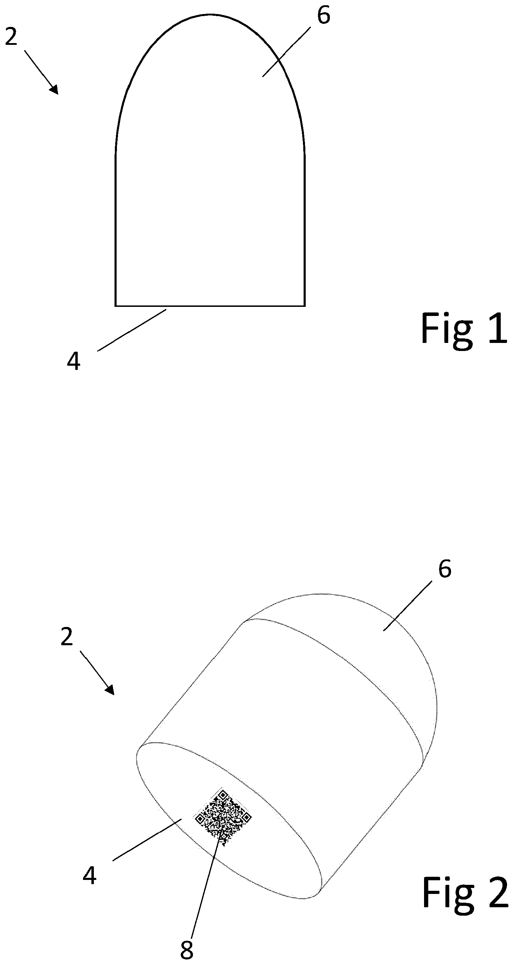

Figures 1 and 2 show a cemented carbide insert 2 for mining or rock cutting applications comprising an at least partially flat base 4 and a working tip portion 6 and further comprising at least one identification (ID) marker 8, otherwise known as a tag, encoded with one-dimensional or two-dimensional optical machine-readable code 4. The base 4 is typically pressed into the drill bit 2, such as it is unexposed to the external operating environment, whereas the working tip portion 6 comes into contact with the rock that it being drilled or cut.

The cemented carbide insert could be used for example, but not exclusively, in any of the top hammer drills, down the hole (DTH) drills, rotary and raise boring drills, cutting pick.

The cemented carbide inserts are made of hard constituents and a metallic binder phase. The hard constituent is usually tungsten carbide (WC) or could be another metal carbide such as (Ti, Nb, Ta, W)C, or combinations thereof. The hard constituents may also include metal carbonitrides such as Ti(C, N). The metallic binder phase may be Co, Ni or Fe, or combinations thereof.

Preferably, the ID marker 8 could be etched, engraved, impressed, imprinted, painted on, or laser printed on, however it could also be added using any other suitable method.

The ID marker 8 could for example, but limited to, be a Quick Response (QR) code, a High Capacity Coloured Two Dimensional Code, a European Article Number code, a DataMatrix code, or a MaxiCode.

Preferably, the ID marker 8 is in the form of a data matrix code. A data matrix code is a two-dimensional bar code which may be in the form of a square or rectangular symbol made up of individual modules of predetermined size in the form of dots or squares. The individual modules form an ordered grid of contrasting (e.g. dark or light) modules, bordered by a finder pattern used to specify the orientation and structure of the symbol. The identification tag can in this case be used to store information about a very large amount of individual sintered bodies, depending on the size of the data matrix code. The size may typically be 12x12 modules, or larger depending on needs. In an error correction algorithm, several damaged or blurred modules can be corrected for. Advantageously if a data matrix code is used more information can be stored in a smaller area. Further, only approximately 32-72% of the data matrix code needs to be intact in order for the information to be read, therefore even if the data matrix code is slightly damaged the information can still be read. It may be preferable that the ID tag used has an industry standard associated with it.

Preferably, the identification marker 8 is positioned on the base 4 of the insert 2. Advantageously, the base is protected from wear when connected to a drilling or cutting tool. Furthermore, if the identification tag is positioned on the base then it will survive the tumbling operation, which is a very hard treatment where the buttons are colliding with each other to create compressive stresses in the surface. The identification marker 8 even survives high energy tumbling if positioned on the base 4 of the insert 2, with no modification of the drill bit geometry required.

Another aspect of the present invention is a method of producing the cemented carbide insert 2 as described hereinbefore or hereinafter comprising the steps of:
- forming a green body from a powder composition comprising at least the one or more hard constituents, the metallic binder phase, and an organic binder system;
- sintering the green body to form a sintered insert 2; and
- adding an ID marking 8 to the insert 2.

Optionally, the method further comprises tumbling the sintered insert 2. The tumbling process is used to introduce compressive stresses into the insert 2, which increases the operational lifetime of the insert 2.

In one embodiment, the step of adding the ID marking 8 is performing as part of the step of forming the green body. Usually the green body is formed using pressing. Alternatively, the green body could be formed using injection molding or additive manufacturing (3D printing). Advantageously, more information about the entire production process, including the powder production, will be gained if the ID marker is added as early as possible. For example, the sources of the different raw materials used to produce the powder can be stored in the code providing data on RTP production as well as the source of the raw materials to assure a responsible sourcing. The ID marker survives the sintering process and the shrinkage occurring during sintering, i.e. a length shrinkage of about 15-20 %, corresponding to a volume shrinkage of about 40-50 %. Large inserts 2 are sometimes sintered standing up, i.e. with the ID marker 8 facing the sintering tray and even with this orientation the ID marker 8 is still readable post sintering.

In one embodiment, the step of adding the ID marking 8 is performed after forming the green body and before the sintering. Advantageously, in this case the weight, pressing pressure and forces used can be stored that then can be coupled to dimensional changes after sintering and thus the possibility to reduce or even exclude the diamond grinding required is achieved.

If the ID marker 8 is added before the sintering step, the ID marker 8 is formed such that it is readable after the sintering operation. By the ID marker being readable is to be understood that the ID marker 8 may be read using e.g. a scanning equipment, such that the sintered body or green body may be identified upon reading the tag.

Preferably the ID marker 8 is added using a laser to selectively modify the surface of the green body. Advantageously, this method means that the ID marker 8 is still able to be clearly read post sintering. It has been found that by selectively modifying the surface using a laser, a pattern may be formed that survives the sintering process and the shrinkage associated therewith. A possible alternative to laser marking may be to form the pattern by mechanically impressing the pattern into the surface of the green body.

By providing the ID marker 8 on the surface of the green body in such a way that the ID marker 8 is readable both prior to sintering and after sintering, the traceability of the green body and the subsequently formed corresponding sintered body can be significantly improved. For example, the individual green bodies/sintered bodies become traceable in the entire production line. By means of a central data collection system configured to read and write data from production steps included in the method of manufacturing the sintered body, information relating to manufacturing conditions can be logged for each individual body by reading the tag and storing information relating to e.g. temperature, date, time, production equipment, etc., in a database. Also, information about the material composition of the powder used for manufacturing the green body can be stored as well as the sources of the different raw materials used to produce the powder. This information is useful when the used cutting insert is to be recycled.

In one embodiment, the step of adding the ID marking 8 is performed after sintering and before the tumbling. If the ID marker 8 is added between the sintering and tumbling steps then it is more likely to remain intact than if it is added at the pressing stage. By adding the ID marker 8 prior to tumbling, information about the pressing and sintering processes can be maintained. If the ID marker 8 is added post sintering the method of application could be selected from, not limited to etching, engraving (e.g. using a laser), impressing, imprinting or being painted on. If the ID marker 8 is added at this point, the readability of the ID marker post tumbling could be used as an indicator as to whether damage to the base of the insert has occurred during tumbling.

In one embodiment, the step of adding the ID marking 8 is performed after the tumbling. Advantageously, if the ID marker 8 is added after tumbling step then it is most likely to remain intact. If the ID marker 8 is added post tumbling the method of application could be selected from, not limited to etching, engraving (e.g. using a laser), impressing, imprinting or being painted on. It is also possible for ID markers 8 to remain intact after other processing treatments, for example the DP process described in patent EP542704B1.

In one embodiment the method further comprises storing data relating to the manufacturing of the sintered body in a central database. For example, information relating to the powder composition, pressing parameters, the sintering conditions and to post-sintering processing may be stored in the central database. By identifying a sintered body or a green body and retrieving data related to the particular body from the central database, the body may be categorised prior to a production step such that suitable processing parameters are selected depending on previous processing of the body.

In one embodiment, the ID marker 8 is added to the insert 2, wherein the ID marker 8 is associated with a database entry in a central database. The association of the ID marker 8 to the database entry may be performed both before and after the ID marker 8 is added to the insert. Then, after each manufacturing step, or after all of the manufacturing steps have been performed, the relevant manufacturing information is stored in said database entry, such that the ID marker 8 is now associated with the added manufacturing information. By having the steps done in this way, it is possible to add an ID marker 8 to an insert during a relatively early stage of manufacturing, while still having the ID marker 8 associated with all the relevant manufacturing information, including information which is obtained after the ID marker 8 is added to the insert.

## Claims

1. A cemented carbide insert (2) for mining or rock cutting applications comprising an at least partially flat base (4) and a working tip portion (6);
**characterized in that:**
the insert (2) further comprises at least one identification (ID) marker (8) encoded with one-dimensional or two-dimensional optical machine-readable code (4).

2. The cemented carbide insert (8) according to claim 1 wherein the ID marker (8) is etched, engraved, impressed, imprinted, painted on, or laser printed on.

3. The cemented carbide insert (2) according to claim 1 or claim 2 wherein the ID marker (8) is a Quick Response (QR) code, a High Capacity Coloured Two Dimensional Code, a European Article Number code, a DataMatrix code, or a MaxiCode.

4. The cemented carbide insert (2) according to any of the previous claims wherein the identification marker (8) is positioned on the base (4) of the insert (2).

5. A method of producing the cemented carbide insert (2) according to any one of claims 1-4, comprising:
forming a green body from a powder composition comprising at least the one or more hard constituents, the metallic binder phase, and an organic binder system;
sintering the green body to form a sintered insert (2); and
adding an ID marking to the insert (2).

6. The method according to claim 5 wherein the ID marking is added to the at least partially flat base (4) of the insert (2).

7. The method according to claim 5 or 6, wherein the method further comprises tumbling the sintered insert (2).

8. The method according to any of claims 5-7 wherein the step of adding the ID marking (8) is performed as part of the step of forming the green body.

9. The method according to any of claims 5-7 wherein the step of adding the ID marking (8) is performed after forming the green body and before the sintering.

10. The method according to claim 7 wherein the step of adding the ID marking (8) is performed after sintering and before the tumbling.

11. The method according to claim 7, wherein the step of adding an ID marking (8) is performed after the tumbling.

12. The method according to any of claims 5-11 wherein the ID marker (8) is added using a laser to selectively modify the surface of the green body.

13. The method according to any claims 5-11, further comprising storing data relating to the manufacturing of the sintered body in a central database.

14. The method according to claim 13, further comprising associating the stored data relating to the manufacturing with the ID marker (8).

15. The method according to claim 13 or 14, wherein the data is stored in the database after the manufacturing is completed.
